# EUROPEAN PATENT SPECIFICATION

(11) **EP 0 566 256 B1**
(45) Date of publication and mention of the grant of the patent: **27.08.1997**
(21) Application number: 93302206.3
(22) Date of filing: 23.03.1993
(51) Int. Cl.: C02F 11/12, C02F 3/12

(54) **Process for treating oily sludge and organic wastes**
Verfahren zur Behandlung von ölhaltigen Schlämmen und organischen Abfällen
Procédé pour le traitement des boues contenant de l'huile et de déchets organiques

(30) Priority: 13.04.1992 US 868072; 01.07.1992 US 907074
(43) Date of publication of application: 20.10.1993
(73) Proprietor: TEXACO DEVELOPMENT CORPORATION, White Plains, New York 10650 (US)
(72) Inventor: Winter, John Duckett, Port Neches, Texas 77651 (US); Myers, James Edward, Port Arthur, Texas 77692 (US); Deever, William Ray, Bedmont, Texas 77706 (US)
(74) Representative: Simpson, Alison Elizabeth Fraser

(56) References cited:
- EP-A- 75 298
- EP-A- 100 007
- EP-A- 0 056 090
- DE-A- 3 840 123
- US-A- 4 072 494
- US-A- 4 339 265
- US-A- 4 668 388

## Description

This invention relates to a process for aerobically biodegrading oily sludges and other organic wastes.

Historically, land farming has been widely used for the biodegradation and disposal of organic wastes and oily sludges. Land farming involves applying the waste to soil and tilling the waste into the soil to allow aerobic bacteria to convert the organic components into carbon dioxide, water and humic matter. Periodic tilling of the soil is necessary to mix the waste uniformly into the soil and to allow air to reach the bacteria and promote the reaction. The availability of the land farming technique has been sharply reduced as a result of regulations relating to the land disposal restriction for hazardous wastes and the environmental impact of the process. In particular, odor generation, the deposition of heavy metals in the soil, and the potential contamination of ground water supplies have resulted in a major reduction in the use of land farming for treating organic and oily wastes.

In many places, composting has taken the place of land farming. Composting is a thermophilic biological process that is widely used for the treatment of municipal sludge and other organic wastes. An important aspect of composting is that the process can be conducted under controlled conditions, thus avoiding the problems inherent in open land farming. A significant use of composting relates to the treatment of municipal sludge. This process is often done by mixing the municipal sludge with a bulking agent, removing excess free water, and subjecting the mixture to forced aeration at an elevated temperature to speed up the composting process. In general, municipal sludge, as well as other types of organic waste, together contain both active microorganisms and nutrients which can initiate and maintain the biological conversion process under suitable conditions.

Oily sludge is extensively found in oil refineries and is also generated in a range of manufacturing operations. In refineries, the oily sludge is produced in a variety of clarifier processes, in holding tanks, and in settling ponds for liquid waste. In general, oily sludge is characterized as relatively low in solids content and which exhibits little biological activity. This latter property is primarily due to the deficient nutrient and electron acceptor contents of the oily sludge.

US 4,292,328 discloses a thermophilic aerobic digestion process for producing animal nutrients by the biochemical degradation of animal waste matter.

US 4,668,388 discloses a high rate reactor for the treatment of biosludge, wherein the reaction is conducted in an enclosure which minimizes any adverse environmental impact. The mixing of sludge with a bulking agent and the use of forced aeration using air pressure as well as process controls are disclosed. This reference reports that no decomposition rate advantage was found when oily sludges were treated in this high rate sludge reactor.

US 3,462,275 discloses a process for treating biodegradable organic waste material using a thermophilic aerobic microorganism culture capable of digesting cellulose and produce cellular proteinaceous material.

EP-A-100007 discloses a process for the biological purification of waste water. In the process, solids and biomass are deposited in part on empty support particles and in part retained in the interstices of the particles. When the filter zone becomes loaded with solids and biomass the support particles are regenerated in a regeneration apparatus arranged above the filter zone. The regeneration apparatus comprises a conveying means, a drainage means, a compression means and a collecting means for biomass liberated from the supports. Accordingly the support particles are regenerated by compression to release biomass.
EP-A-0075298 discloses a process and apparatus for the biological purification of waste water. The waste water is aerated in the reactor in the presence of activated sludge which is in part carried on carrier particles. The carrier particles are microporous and the process is conducted in such a way that rising gas bubbles from aeration gas create sufficient buoyancy for the carrier particles to maintain the biomass - laden particles in suspension. The specific gravity of the particles is generally slightly above the specific gravity of the liquid.

An object of this invention is to provide a novel process for remediating oily sludge and other organic wastes.

Another object is to provide a more improved method for treating low solids content oily sludge.

Still another object is to provide a process which generates and maintains an active biomass substrate for extended periods of time.

Another object is to provide a process for the bioremediation of a low solids content oily sludge in a high solids content reaction.

Another object is to provide a method for treating oily sludge solids and other organic wastes in deep beds of the reaction mixture with reduced mixing energy requirements.

Another object is to provide a method for dewatering and treating sludges in the same reaction vessel.

According to the present invention there is provided a method for aerobically treating a low solids water-containing oily sludge or other organic waste which comprises combining said waste with a biologically inert, non-friable bulking agent having a component with a density less than water to form a mixture, passing an oxygen-containing gas through said mixture to separate excess water and form a high solids content reaction mixture, reacting said high solids content reaction mixture in the presence of an aerobic biomass under effective aerobic conditions to form a treated sludge and an active biomass-coated bulking agent component having a density less than water in said high solids content reaction mixture, separating by flotation said biomass-coated bulking agent component having a density less than water from said treated sludge or waste, and recovering said treated sludge or waste from said reaction mixture.

The present invention is a novel method for aerobically treating water-containing oily sludges and other organic wastes having a relatively low solids content in a high solids content reaction. This process may be conducted in a closed reactor with suitable controls to prevent any adverse environmental impact. The process involves mixing the oily sludge or organic wastes with an inert and non-friable bulking agent with a substantial component having a density less than water in the presence of active biomass and nutrients. An oxygen-containing gas is passed through the reaction mixture to assist in the removal of excess (free) water from the sludge or wastes to form a wetted high solids content reaction mixture containing the oily sludge and oily sludge solids or waste solids in a bed of bulking agent. Effective aerobic reaction conditions are employed to convert the oily sludge to a treated sludge or the organic waste to treated waste and to coat the bulking agent, including the bulking agent component having a density less than water, and sludge solids with active biomass media. The biomass-coated bulking agent low density component is then separated from the treated solids. The treated oily sludge or waste is recovered and the active biomass-coated bulking agent component having a density less than water is used for the treatment of fresh oily sludge or other fresh organic waste.

The present invention is particularly adapted to the remediation or treatment of a low solids content water-containing oily sludge from a variety of manufacturing operations, but, more particularly, from oil refinery operations, or to the remediation or treatment of organic wastes containing organic compounds susceptible to bioremediation derived from a variety of manufacturing operations, including sanitary wastes. The low solids content oily sludge may have anywhere from 1 to 30 weight percent of solids in the sludge, although occasionally a larger amount may be present. Often, such a sludge will have from 1 to 10 percent of solids, and most often from 2 to 7 weight percent solids. Oily sludge is lacking in many nutrient materials which are vital for microbial activity. The oily sludge may also contain some treatable organic liquids. A valuable aspect of this process is that the organic liquids and solids present or mixed in the oily sludge tend to adhere to the solid components in the high solids content reaction mixture and be remediated in the course of this biodegradation process. Oily sludges from some operations may be classified as a toxic or hazardous waste material. In general the wastes should be free of listed hazardous materials.

The low solids content water-containing oily sludge or organic waste susceptible to bioremediation, is mixed with a suitable amount of a biologically inert, non-friable bulking agent characterized by having a substantial component with a density less than water, and solid residue from the ongoing treatment of the oily sludge or waste, to form a reaction mixture. The nature and properties of the bulking agent are critical in the present invention. The bulking agent may be prepared from a synthetic material, such as polystyrene or polypropylene, or it may be prepared from natural materials having the prescribed properties. It must be substantially inert, that is, it must not be a carbon source or be consumed to a significant extent by the microorganisms in aerobic bio-degradation processes. Preferably, the bulking agent should be essentially non-reactive with aerobic microorganisms. The bulking agent must also be substantially oil-resistant and substantially insoluble in the liquid components employed in the reaction, either the water or organic solvents introduced with the sludge. The texture of the surface of the bulking agent may be irregular, smooth, or porous.

A vital property of the bulking agent is that a substantial component or fraction of the bulking agent must have a particle density less than the density of water. This characteristic of the light bulking agent component is employed to promote an effective separation of the light bulking agent component from the treated oily sludge or organic waste. The density of the light bulking agent component having a density less than the density of water is determined in the dried form and is expressed in kilograms per cubic meter (pounds per cubic foot) of the dry material. In general, the bulk density of the light component may range from 8.0 to 480 kg/m³ (0.5 to 30 pounds per cubic foot). A more preferred bulk density for this component is from 16 to 160 kg/m³ (1 to 10 pounds per cubic foot), with the most preferred range being from 16 to 64 kg/m³ (1 to 4 pounds per cubic foot). The light bulking agent component may be prepared from synthetic materials or plastics and may be prepared by a process that produces closed cell foam plastic beads, such as polystyrene beads.

Ideally, the bulking agent may consist of a single material having a substantial component or fraction that has a density lighter than water, and a second component or fraction that is heavier than water. A suitable mixture of the two components or fractions, when employed in the dewatered high solids content reaction mixture, will produce effective operating densities for this reaction mixture of broadly from 160 to 1281 kg/m³ (10 to 80 pounds per cubic foot), and, most preferably, from 480 to 961 kg/m³ (30 to 60 pounds per cubic foot). Since the synthetic or plastic materials are generally very light, as noted above, it is contemplated that a portion of the same material may be made heavier than water by the encapsulation of a heavy inert material within the synthetically prepared bulking agent. The heavy inert filler material may be clay, titanium dioxide, sand, and any other heavy inert material. Alternatively, more than one bulking agent may be employed, with at least one bulking agent being a component having a density less than water and at least one bulking agent being a component having a density heavier than water. The ratio of light bulking agent component to the heavy bulking agent component may range from 25 percent to 75 percent by volume. A preferred ratio is a 50-50 volume ratio.

The bulking agent reactor media is typically a multi-component mixture consisting of one or more inert components and the treated solids. At least one component of the bulking agent/media as noted above should have a particle specific gravity of less than 1.0 (less than water). This is necessary to promote the separation of an active biomass-coated bulking agent component having a density less than water to enable the recovery and reuse or recycling of an active biomass-coated component acclimated to the waste feed.

The average operating density of the high solids content reaction mixture (wet, but without free water and containing particles covered with a biofilm) should be between 160 to 1281 kg/m³ (10 and 80 pounds per cubic foot), preferably from 320 to 1201 kg/m³ (20 to 75), and most preferably from 480 to 961 kg/m³ (30 to 60 pounds per cubic foot). Materials with a density less than 160 kg/m³ (10 pounds per cubic foot) will not mix properly, and materials with a density substantially above 1281 kg/m³(80 pounds per cubic foot), say 1602 kg/m³ (100 pounds per cubic foot), make mixing difficult and inefficient because of the high density. A high density mixture also requires substantially additional energy input for effective mixing.

It has been found that a mixture of plastic foam beads and sand has ideal mixing characteristics, but a single component system of solid plastic beads or a denser plastic foam bead possibly with an inert filler, such as clay, tiO₂, or sand, would also be effective while reducing abrasion of reactor mixers. It should be noted that the oily sludge being treated will generally always introduce some clay and/or sand into the reactor.

Because an optimum density for the bulking agent is relatively easy to achieve, another benefit is realized. The high solids content reaction mixture comprising the bulking agent and the oily sludge solids or organic waste solids may be mixed with a modest energy input. As a result, deep beds of the reaction mixture can be processed using the present method. The depth of the high solids content reaction mixture may range from 1.0m (3 feet) up to potentially 6.0m (20 feet). A preferred depth is from 1.0m to 4.5m (3 to 15 feet) deep, with the most preferred mixed depth being from 1.2m to 3.0m (4 to 10 feet). An attractive benefit is the processing efficiency realized by being able to treat a relatively large amount of material in a deep bed reactor and to do so with a modest energy input. It is postulated that the exclusive use of a heavy bulking agent, such as sand, in a high solids deep bed reaction would require substantially greater amounts of power for mixing and that achieving an efficient aerobic reaction in a heavy compact mass of material would be difficult. It will be appreciated that effective mixing is critical to distribute feed and nutrients throughout the reaction mixture.

The bulking agent must also be substantially non-friable, that is, it should be substantially resistant to disintegration or crumbling in the process. This is important from two aspects: (1) to maintain the bulking agent in a useful condition for extended periods of reaction time whether the process is conducted continuously or in a batch method of operation; and (2) to prevent the bulking agent from either plugging up or passing through the porous membrane/separator barrier which has the function of permitting the exit of excess water and gases from the reaction mixture. The performance advantages described above for the prescribed bulking agent are not found in conventional processes. Known bulking agents will not support the kind of separation which is a unique feature of the instant process. Also, some known bulking agents will react with or be reacted on by the biomass, tending to significantly reduce the effectiveness of the conversion of the oily sludge or waste solids.

The physical size of the bulking agent is an important factor for an efficient operation. In general, the bulking agent may be a granular material and have a size ranging from 0.2 to 25 millimetres, with a preferred size ranging from 1 to 10 millimetres, and a still more preferred size being from 1 to 5 millimetres. The actual shape of the bulking agent is not particularly important, although an aspect ratio near unity (and increasing sphericity) is generally desirable.

A large surface area in the bulking agent or substrate provide substantial advantages in the effectiveness of this process. The large surface area attracts and holds the decomposable components in the oily sludge or organic waste and, the biomass, as well as the moisture, oxygen, and nutrients in intimate contact with the result that the bacterial oxidation of the solids being treated under appropriate aerobic conversion conditions is efficiently conducted. The retention of the biomass on the bulking agent permits a relatively high feed rate for the oily sludge or organic waste to the reactor with little or no wash-out of the biomass, thus maintaining the high activity in the reactor and reducing the biomass separation and recycle rates necessary in most steady state bioreactors. Bulking agents may be made from synthetic materials. Expanded synthetic material, such as expanded polystyrene spheres, are extremely light weight and have a large surface area per unit mass. The surfaces of the light weight synthetic bulking agents may be irregular and may be porous, which increases their surface area for improved effectiveness in this process.

While the use of the above-described bulking agent is critical in the present process, this does not preclude the presence of other bulking agents. Conventional bulking agents that may be employed with the prescribed light bulking agent include sand and fine gravel.

There is an unmixed region between the mixed reaction media and the separation membrane. A relatively small amount of a heavy granular or comminuted material may be employed to function as a bottom filter or screen above a membrane/separator to catch any loose oily sludge solids, waste solids or biomass.

The present process is conducted by directing a low solids content water-containing oily sludge or an organic or sanitary waste containing organic compounds susceptible to bioremediation into a suitable reaction vessel containing an inert, non-friable bulking agent having the prescribed characteristics. The two materials are intimately admixed with the aid of suitable mixing means. A mechanical mixing device comprising an overhead rotating arm carrying rotating augers extended into the reaction mixture has been found to be very effective. Gaseous jet streams and/or liquid jet streams or other mechanical means are also contemplated as alternative ways for agitating the reaction mixture of the bulking agent and oily sludge or organic waste. This process is not dependent on any particular means for mixing the reaction mixture.

This process is conducted in a suitable reaction vessel. Preferably, it is conducted in an enclosed reaction vessel. Conducting the process in an isolated or sealed reaction vessel permits tight control of all the products and by-products of the reaction so as to avoid any adverse environmental impact from the process. However, it is contemplated that the reaction may be conducted in a reaction vessel that is not totally enclosed where environmental standards are not as stringent. At the start of the process, the nature of the water-containing oily sludge or waste dictates whether or not other elements may be required to produce an effective aerobic reaction. If the sludge or waste is deficient or devoid of active biomass as, for instance, when the process is initially started, it may be necessary to add an active aerobic biomass to start the reaction. Aerobic-acting bacteria that may be employed include mesophilic, thermophilic, and psychrophilic bacteria. The reactor media is biomass-covered solids, including the bulking agent and solids from the oily sludge or waste. If the bulking agent has been previously used in a bioreaction and is coated with an active biomass already acclimated to the waste feed, which is a particularly advantageous feature of this process, it may not be necessary to add any other aerobic acting media to the reaction mixture. In the event there is a need for the injection of active biomass, it may be added directly to the water-containing oily sludge or waste feed as it enters into the reaction vessel or it may be added to the high solids content reaction mixture in that stage of the process.

The aerobic bacterial reaction is dependent on the presence of suitable nutrients in the reaction mixture. In general, oily sludges tend to be deficient in many nutrients necessary to support an aerobic bacterial reaction. Suitable amounts of the required known nutrients may be added either to the low solids content water-containing oily sludge or they may be added to the high solids content reaction mixture. In general, organic and sanitary wastes contain nutrients necessary to support an aerobic bacterial reaction. If the organic waste is deficient in nutrients, suitable amounts of the required known nutrients may be added.

This process is advantageously conducted in a reactor having a membrane/separator in the lower portion of the reactor but spaced apart from the bottom of the reactor leaving a liquid and gaseous collection zone beneath the membrane/separator support or carrier for the reaction mixture. In practice, it is convenient to first load the reaction vessel with an appropriate amount of the bulking agent. A suitable amount of the low solids content water-containing oily sludge or waste material is then added to the reaction mixture. If necessary, a small amount of an active aerobic bacteria or biomass agent and nutrients may be added to the reactor. This mixture is mixed, preferably with some or all of the reactor being mixed at all times, while a pressure differential is impressed on the reaction mixture to promote rapid dewatering of the low solids content oily sludge or of the organic or sanitary waste. A preferred method of doing this is to apply a vacuum to the collection zone below the membrane/separator in the reactor. In a closed reactor, pressure may be applied above the surface of the reaction mixture to assist in the dewatering step. This may be done in combination with the application of a vacuum below the reaction mixture. A pressure drop of from 0.2 to 10 centimetres of water has been employed in some tests, but it is contemplated that the pressure differential may range from 338 Pa to 51 kPa (0.1 to 15 inches of mercury), depending on the depth of reactor materials, the waste degradation rate, and the media particle size. The pressure differential on the reaction mixture has the effect of rapidly removing a substantial amount of the excess water content present in the low solids content oily sludge or waste feed, but does not completely dry the reaction mixture. This leads to the formation of a high solids content reaction mixture comprising the bulking agent, sludge or waste solids, non-aqueous liquids, and water, which is a most efficacious form for biodegrading the organic solids or other organic material in the oily sludge.

The low solids content water-containing oily sludge feed to the reactor may have from 1 to 30 weight percent solids, with the balance being substantially oil and water. In general, the oily sludge feed will have more than 30 volume percent water and may have a water content ranging from above 30 up to 99 volume percent. More common are oily sludge feed streams with from 75 to 98 volume percent water. Following the dewatering step in the process, the high solids content reaction mixture will be characterized as having from 40 to 80 volume percent solids comprising mainly bulking agent and oily sludge solids. It will be noted that the wetted biomass is not totally submerged in water in the high solids content reaction mixture as would be the case in a slurry type reaction or a submerged fixed film reactor. There is, however, sufficient water or moisture in this high solids reaction mixture to ensure that the oxygen-containing gas will have a very high relative humidity, thereby promoting efficient biodegradation. It will be noted that in the cases of a slurry-type reaction or a submerged fixed film reaction, two mass transfer steps are necessary for the oxygen to pass from the air to the water and then to the biomass. In the present process, oxygen can pass directly into the biomass, a single mass transfer step.

The high solids content reaction mixture is preferably maintained under constant agitation by any suitable means while an oxygen-containing gas is introduced into the reactor to support the aerobic conversion of the oily sludge. Heat is generated by the biological reaction, and the temperature of the reaction mixture in the reactor is constantly monitored so as to maintain a most effective aerobic reaction. Generally, the temperature will be maintained between 21°C (70°F) to 82°C (180°F), with the preferred reaction temperature being 32°C (90°F) to 71°C (160°F). In a preferred operation, the withdrawal of liquids and oxygen-containing gas downwardly from the reaction mixture mass and into the collection zone below thee reaction mixture permeable divider may cause some loss of heat in the high solids content reaction mixture. Any heat loss may be compensated for by heating the incoming oxygen-containing gas being fed to the reaction vessel. Other means of heating the reaction mixture, say by lining the walls of the reactor with heat exchange means or by installing radiant heaters in the reactor, will be obvious to those skilled in the art. The method employed for maintaining a suitable temperature for the aerobic reaction in the reaction mixture is not a critical feature in this process.

An oxygen-containing gas is employed in the instant process to support an aerobic microbial conversion of the organic components in the oily sludge or waste material. This oxygen-containing gas, which passes through the reaction mixture, must contain sufficient oxygen to ensure aerobic reaction conditions. An adequate amount of air is generally sufficient to accomplish this. However, oxygen-containing gases containing from as low as 10 volume percent oxygen up to enriched gases containing as high as 50 volume percent of oxygen may be employed for this purpose. A preferred oxygen content for the oxygen-containing gas is from 14 to 30 volume percent oxygen. Air with 20 percent oxygen is a preferred source of the oxygen.

An air flow rate through the reaction mixture of from 0.05 to 0.2 cubic feet of air per minute per square foot of the high solids content reaction mixture has been found to be effective. Broader limits are also deemed to be effective. In general, the air flow should be such that two-six times the stoichiometric oxygen demand is supplied.

A suitable pH must be maintained in the reaction mixture in order to have an effective aerobic reaction. Broadly, a pH ranging from 5.5 to 9 may be employed. A preferred range is a pH from 6 to 9, and a most preferred pH is a range from 6 to 8. The management of the pH for this microbial process is within the skill of the art.

In the course of the reaction, the oily sludge solids, organic waste or sanitary waste containing organic compounds susceptible to bioremediation are aerobically reacted and converted to form a treated sludge or waste having a reduced volume or mass and is suitable for disposal. During the course of the reaction, active biomass attaches itself to and is retained on the inert bulking agent components. When the oily sludge solids or wastes have been sufficiently converted to form a treated sludge or remediated humic material, this treated material is separated from the light bulking agent now retaining substantial amounts of the active biomass. This separation may be accomplished by pumping water into the reaction vessel. The light bulking agent component, having a density lower than water and carrying retained or attached biomass, will separate by flotation from the treated oily sludge solids or treated wastes. In the separation, an upper layer will form comprising the light bulking agent component with retained biomass, and a lower layer comprising the treated oily sludge solids, treated wastes or humic material with any heavier bulking agent.

In the separation, a substantial amount of the low density component of the bulking agent is separated by flotation from the body of the treated sludge solids. Generally, above 50 percent of the low density component of the media-coated bulking agent will separate in the flotation step. It is preferred that at least 65 percent of the low density component of the bulking agent be so separated with a more preferred amount being at least 80 percent. Still more preferred is to separate at least 90 percent of the low density component of the bulking agent, and most preferably to separate for recovery and reuse at least 95 percent of the used and media-coated low density component of the bulking agent.

It will be appreciated that the separation and recovery of the low density or light bulking agent component represents not only a significant economic saving in the operation of the process, but also substantially reduces the amount of treated solids that have to be recovered and disposed. It has been noted above that the availability of the bulking agent with attached acclimated active biomass substantially enhances the treatment of fresh oily sludge charge or fresh waste charge.

The treated sludge or waste may be removed from the reactor and the active media-coated light bulking agent retained in the reactor for the processing of a fresh charge of low solids content water-containing oily sludge or waste. Alternatively, the reaction mass can be removed from the reactor first, followed by separation of the treated sludge or waste from active media-coated bulking agent, followed by recycle of the media-coated bulking agent to the reactor for further reaction with fresh oily sludge or fresh organic or sanitary waste. Because the biomass media retained on the bulking agent is in an active or viable state or condition and acclimated to the waste material feed, no new or extended incubation period is required for the continuance of this process.

The invention will be further described with reference to the accompanying drawing.

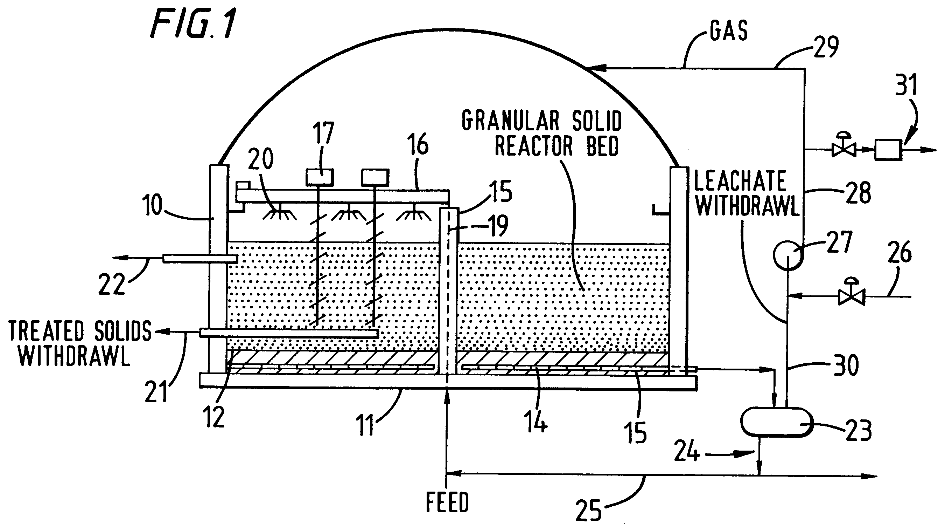

Fig. 1 is a schematic cross-section view showing a typical arrangement for a reaction vessel useful for conducting the practice of the invention.

The reactor 10 is an enclosed vessel with an external base 11 and an oil-resistant vapor and liquid permeable internal membrane/separator 12 spaced apart from said base. The membrane/separator is a barrier to the passage of the bulking agent and the sludge solids, but freely passes water, leachate and gases from the reaction mixture into collection zone 14 between the membrane/separator and the base 11. Central post 15 carries a cross-arm 16 on which is mounted mechanical mixing means 17 and spray heads 20 for introducing oily sludge and organic wastes and may also be used for feeding make-up water or recycled oxygen-containing gas. Brackets 18 are bearing supports for the outer end of supporting arm 16, enabling the control arm to traverse the reaction mixture in a circular manner. Conduit 19 passes through central post 15 and communicates with the spray heads 20 mounted on cross-arm 16. Conduit 19 and spray heads 20 may communicate with a feed supply for the oily sludge and wastes, not shown. Other means may be employed for introducing the feed charge. Conduit 21 communicates with the treated solids in reaction bed 22 and is an unloading route for the withdrawal of treated solids.

Line 15 communicates with the fluids and gases in collection zone 14 and carries the water, leachate and gases to the collection tank 23. Collection zone 14 may be an open space or it may be filled with packing material so long as an adequate passageway remains open for the removal of water and gases. Line 24 communicates with line 25 for the withdrawal of liquids from tank 23, either for disposal or for recycling to the reactor via lines 25 and 19.

Line 26 is for an oxygen-containing gas supply for the process which may be delivered through pump 27 and lines 28 and 29. A heater, not shown, is optionally installed on the gas inlet line. Line 30 communicates with lines 28 and 29 for the recycle of oxygen-containing gas from collection tank 23 to the reactor. Line 30 may also be used for the removal of offgases from tank 23 through line 28 and exit line 31.

The reactor bed contains a nearly biologically inert, oil-resistant, non-friable bulking agent, some part of which has a specific gravity less than water. The bed height may range from 1.0m (3 feet) deep to 6.0m (20 feet) deep. Sensors, not shown, are attached to the reactor to monitor temperatures. The oxygen content and the pH of the reaction mixture are measured in the fluids leaving the reactor in order to maintain optimum reaction conditions. Line 21 communicates with the reaction zone in the bed of the reaction mixture for the withdrawal of treated solids. Line 22 communicates with an upper portion of the reaction zone. It may be used to remove the active biomass-coated bulking agent from the reaction zone after it has been separated from the treated oily sludge solids or other organic wastes. This biomass-coated bulking agent is particularly valuable for treating fresh oily sludge solids and organic wastes without a prolonged incubation period.

### EXAMPLE 1

An enclosed cylindrical reactor vessel having an internal separator consisting of non-woven geotextile with a layer of fine sand on the geotextile and having an integral drainage zone below said geotextile separator filled with pea-size gravel and having a perforated pipe conduit into said drainage zone was employed. Reactor media, comprising a biomass and a bulking agent consisting of a 50-50 volume percent of plastic beads having from 1 to 5 millimetres diameter and a dry bulk density from 16 to 64 kg/m³ (1 to 4 pounds per cubic foot), and sand, having from 0.01 to 1 millimetre diameter, is introduced into the reactor.

One hundred parts of oily sludge with added nutrients having a solids content of about 5 weight percent are introduced into the reactor. A vacuum of about 6.895 kPa per 0.3m (1 psi per foot) of reaction mass depth is applied to the drainage zone while heated air is introduced into the top of the reactor and while the oil sludge and reactor media are thoroughly mixed with continuous or intermittent agitation.

The reaction temperature is maintained between 21°C and 60°C (70°F and 140°F) and a gas flow rate for air is 3.0cm (0.1 foot) per minute downwardly through the reaction mixture.

A dewatering rate is achieved that far exceeds the maximum feed rates based on the biodegradation rates. It is calculated that biosludge treatment rates exceeding one pound of dry solids per square foot per week, or oily sludge treatment rates exceeding 4.5 kg (10 pounds) of sludge per 0.1m² (square foot) per week will be realized.

### EXAMPLE 2

The enclosed cylindrical reactor vessel and reactor media are as described in Example 1.

One hundred parts of wastewater treatment biosludge with added nutrients having a solids content of about 5 weight percent are introduced into the reactor. A vacuum of about 3.4 KPa (0.5 psi) per 0.3m (foot) of reaction mass depth is applied to the drainage zone while heated air is introduced into the top of the reactor and while the wastes and reactor media are thoroughly mixed with continuous or intermittent agitation.

The reaction temperature is maintained between 21°C and 60°C (70°F and 140°F) and a gas flow rate for air is about 0.045m (0.15 foot) per minute downwardly through the reaction mixture.

A dewatering rate is achieved that far exceeds the maximum feed rates based on the biodegradation rates. It is calculated that biosludge treatment rates exceeding 0.45 kg (one pound) of dry solids per cubic foot of reaction mass per week will be realized.

A novel method for the treatment of oily sludge has been provided. This process provides unique advantages in efficiency for a biodegradation process for oily sludge that has not been demonstrated heretofore.

## Claims

1. A method for aerobically treating a low solids water-containing oily sludge or other organic waste which comprises combining said waste with a biologically inert, non-friable bulking agent having a component with a density less than water to form a mixture, passing an oxygen-containing gas through said mixture to separate excess water and form a high solids content reaction mixture, reacting said high solids content reaction mixture in the presence of an aerobic biomass under effective aerobic conditions to form a treated sludge and an active biomass-coated bulking agent component having a density less than water in said high solids content reaction mixture, separating by flotation said biomass-coated bulking agent component having a density less than water from said treated sludge or waste, and recovering said treated sludge or waste from said reaction mixture.

2. A method as claimed in Claim 1 in which said bulking agent component having a density less than water comprises at least 25 volume percent of said bulking agent.

3. A method as claimed in Claim 1 or Claim 2 in which said bulking agent component having a density less than water comprises from 25 to 75 volume percent of said bulking agent.

4. A method as claimed in Claim 1 or Claim 2 or Claim 3 in which said high solids content reaction mixture is a wetted reaction mixture.

5. A method as claimed in any one of the preceding Claims in which said oxygen passes into said biomass in a single mass transfer step.

6. A method as claimed in any one of the preceding Claims in which said bulking agent component having a density less than water has a dry bulk density ranging from 8.0 to 480 kg/m³ (0.5 to 30 pounds per cubic foot).

7. A method as claimed in any one of the preceding Claims in which said low solids content water-containing oily sludge or waste has a solids content in the range from 1 to 30 weight percent and said high solids content mixture contains from 40 to 60 volume percent solids.

8. A method as claimed in any one of the preceding Claims in which said aerobic reaction conditions include a temperature in the range of 21°C to 82°C (70°F to 180°F) and a pH in the range of 5.5 to 9.

9. A method as claimed in any one of the preceding Claims in which pressure differential means are employed to pass said oxygen-containing gas through said mixture and to enhance removal of excess water.

10. A method as claimed in any one of the preceding Claims in which said aerobic reaction is conducted in a closed reaction vessel.

11. A method as claimed in any one of the preceding Claims in which said aerobic reaction is effected with a bacterium selected from the class consisting of mesophilic bacteria and thermophilic bacteria.

12. A method as claimed in any one of the preceding Claims in which an oxygen-containing offgas is recovered and recycled to said reaction mixture and optionally, heated.

13. A method as claimed in any one of the preceding Claims in which said bulking agent is an organic polymer.

14. A method as claimed in any one of the preceding Claims in which said oxygen-containing gas is passed downwardly through said reaction mixture.

15. A method as claimed in any one of the preceding Claims in which said oxygen-containing gas contains from 10 to 50 volume percent of oxygen.

16. A method as claimed in any one of the preceding Claims in which biological nutrients other than carbon are added to said reaction mixture.

17. A method as claimed in any one of the preceding Claims in which said water and said oxygen-containing gas are removed from said reaction mixture through a vapor and liquid permeable separator.

18. A method as claimed in any one of the preceding Claims in which said high solids content reaction mixture has a density ranging from 160 to 1281 kg/m³ (10 to 80 pounds per cubic foot).

19. A method as claimed in any one of the preceding Claims in which at least 50 percent of said biomass-coated bulking agent component having a density less than water is separated from said treated sludge or waste.

## Patentansprüche

1. Ein Verfahren zur aeroben Behandlung von Wasser enthaltendem ölhaltigen Schlamm oder anderem organischen Abfall mit niedrigen Feststoffgehalt, welches umfaßt, daß besagter Abfall mit einem biologisch inerten, nicht-zerreibbarem Füllstoff kombiniert wird, der eine Komponente aufweist, die eine geringere Dichte als Wasser besitzt, um eine Mischung zu bilden, daß ein Sauerstoff enthaltendes Gas durch besagte Mischung hindurchgeleitet wird, um überschüssiges Wasser abzutrennen und eine Reaktionsmischung mit hohem Feststoffgehalt zu bilden, daß besagte Reaktionsmischung mit hohem Feststoffgehalt in der Gegenwart einer aeroben Biomasse unter wirksamen aeroben Bedingungen umgesetzt wird, um einen behandelten Schlamm und eine mit aktiver Biomasse überzogene Füllstoffkomponente, die eine geringe Dichte als Wasser aufweist, in besagter Reaktionsmischung mit hohem Feststoffgehalt zu bilden, daß besagte mit Biomasse überzogene Füllstoffkomponente, die eine geringe Dichte als Wasser aufweist, durch Flotation von besagtem behandelten Schlamm oder Abfall abgetrennt wird und daß besagter behandelte Schlamm oder Abfall aus besagter Reaktionsmischung wiedergewonnen wird.

2. Ein Verfahren nach Anspruch 1, bei dem besagte Füllstoffkomponente, die eine geringere Dichte als Wasser aufweist, wenigstens 25 Volumenprozent von besagtem Füllstoff umfaßt.

3. Ein Verfahren nach Anspruch 1 oder Anspruch 2, bei dem besagte Füllstoffkomponente, die eine geringere Dichte als Wasser aufweist, 25 bis 75 Volumenprozent von besagtem Füllstoff umfaßt.

4. Ein Verfahren nach Anspruch 1 oder Anspruch 2 oder Anspruch 3, bei dem besagte Reaktionsmischung mit hohem Feststoffgehalt eine angefeuchtete Reaktionsmischung ist.

5. Ein Verfahren nach einem der vorangehenden Ansprüche, bei dem besagter Sauerstoff in einem einzigen Massetransferschritt in besagte Biomasse hineinströmt.

6. Ein Verfahren nach einem der vorangehenden Ansprüche, bei dem besagte Füllstoffkomponente, die eine geringere Dichte als Wasser aufweist, eine Trockenrohdichte im Bereich von 8,0 bis 480 kg/m³ (0,5 bis 30 pounds pro cubic foot) besitzt.

7. Ein Verfahren nach einem der vorangehenden Ansprüche, bei dem besagter Wasser enthaltende ölhaltige Schlamm oder Abfall mit niedrigem Feststoffgehalt einen Feststoffgehalt im Bereich von 1 bis 30 Gewichtsprozent besitzt und besagte Mischung mit hohem Feststoffgehalt von 40 bis 60 Volumenprozent Feststoffe enthält.

8. Ein Verfahren nach einem der vorangehenden Ansprüche, bei dem besagte aerobe Reaktionsbedingungen eine Temperatur im Bereich von 21°C bis 82°C (70°F bis 180°F) und einen pH im Bereich von 5,5 bis 9 einschließen.

9. Ein Verfahren nach einem der vorangehenden Ansprüche, bei dem Mittel zur Erzeugung eines Druckgefälles eingesetzt werden, um besagtes Sauerstoff enthaltende Gas durch besagte Mischung hindurchzuleiten und die Entfernung von überschüssigem Wasser zu verstärken.

10. Ein Verfahren nach einem der vorangehenden Ansprüche, bei dem besagte aerobe Reaktion in einem geschlossenen Reaktionsbehälter durchgeführt wird.

11. Ein Verfahren nach einem der vorangehenden Ansprüche, bei dem besagte aerobe Reaktion mit einem Bakterium bewirkt wird, das ausgewählt ist aus der Klasse, die aus mesophilen Bakterien und thermophilen Bakterien besteht.

12. Ein Verfahren nach einem der vorangehenden Ansprüche, bei dem ein Sauerstoff enthaltendes Abgas wiedergewonnen und zu besagter Reaktionsmischung rückgeführt und fakultativ erwärmt wird.

13. Ein Verfahren nach einem der vorangehenden Ansprüche, bei dem besagter Füllstoff ein organisches Polymer ist.

14. Ein Verfahren nach einem der vorangehenden Ansprüche, bei dem besagtes Sauerstoff enthaltende Gas in Abwärtsströmung durch besagte Reaktionsmischung geleitet wird.

15. Ein Verfahren nach einem der vorangehenden Ansprüche, bei dem besagtes Sauerstoff enthaltende Gas von 10 bis 50 Volumenprozent Sauerstoff enthält.

16. Ein Verfahren nach einem der vorangehenden Ansprüche, bei dem andere biologische Nährststoffe als Kohlenstoff zu besagter Reaktionsmischung zugesetzt werden.

17. Ein Verfahren nach einem der vorangehenden Ansprüche, bei dem besagtes Wasser und besagtes Sauerstoff enthaltende Gas aus besagter Reaktionsmischung durch einen dampf- und flüssigkeitsdurchlässigen Separator entfernt werden.

18. Ein Verfahren nach einem der vorangehenden Ansprüche, bei dem besagte Reaktionsmischung mit hohem Feststoffgehalt eine Dichte im Bereich von 160 bis 1281 kg/m³ (10 bis 80 pounds pro cubic foot) besitzt.

19. Ein Verfahren nach einem der vorangehenden Ansprüche, bei dem wenigstens 50 Prozent besagter mit Biomasse überzogenen Füllstoffkomponente, die geringere Dichte als Wasser aufweist, von besagtem behandelten Schlamm oder Abfall abgetrennt wird.

## Revendications

1. Procédé pour traiter aérobiquement une boue huileuse ou un autre déchet organique contenant de l'eau à faible teneur en matières solides, qui comprend le fait de combiner ledit déchet avec un agent de gonflement biologiquement inerte, non friable, ayant un constituant avec une densité inférieure à celle de l'eau, pour former un mélange, de faire passer un gaz contenant de l'oxygène au travers dudit mélange pour séparer l'eau en excès et former un mélange réactionnel à haute teneur en matières solides, à faire réagir ledit mélange réactionnel à haute teneur en matières solides en présence d'une biomasse aérobie dans des conditions aérobies efficaces pour former une boue traitée et un constituant agent de gonflement revêtu de biomasse active, ayant une densité inférieure à celle de l'eau, dans ledit mélange réactionnel à haute teneur en matières solides, de séparer par flottation ledit constituant agent de gonflement revêtu de biomasse, ayant une densité inférieure à celle de l'eau, de ladite boue ou dudit déchet traité(e), et de récupérer ladite boue ou ledit déchet traité(e) dudit mélange réactionnel.

2. Procédé selon la revendication 1, dans lequel ledit constituant agent de gonflement ayant une densité inférieure à celle de l'eau comprend au moins 25 % en volume dudit agent de gonflement.

3. Procédé selon la revendication 1 ou la revendication 2, dans lequel ledit constituant agent de gonflement ayant une densité inférieure à celle de l'eau comprend de 25 à 75 % en volume dudit agent de gonflement.

4. Procédé selon la revendication 1 ou la revendication 2 ou la revendication 3, dans lequel ledit mélange réactionnel à haute teneur en matières solides est un mélange réactionnel humidifié.

5. Procédé selon l'une quelconque des revendications précédentes, dans lequel ledit oxygène passe dans ladite biomasse en une seule étape de transfert de masse.

6. Procédé selon l'une quelconque des revendications précédentes, dans lequel ledit constituant agent de gonflement ayant une densité inférieure à celle de l'eau a une densité apparente sèche allant de 8,0 à 480 kg/m³ (0,5 à 30 livres par pied cube).

7. Procédé selon l'une quelconque des revendications précédentes, dans lequel ladite boue huileuse ou ledit déchet contenant de l'eau, à faible teneur en matières solides, a une teneur en matières solides dans la gamme de 1 à 30 % en poids et ledit mélange à haute teneur en matières solides contient de 40 à 60 % en volume de matières solides.

8. Procédé selon l'une quelconque des revendications précédentes, dans lequel lesdites conditions de réaction aérobies incluent une température dans la gamme de 21 °C à 82 °C (70 °F à 180 °F) et un pH dans la gamme de 5,5 à 9.

9. Procédé selon l'une quelconque des revendications précédentes, dans lequel des moyens d'écart de pression sont employés pour faire passer ledit gaz contenant de l'oxygène au travers dudit mélange et pour améliorer l'élimination de l'eau en excès.

10. Procédé selon l'une quelconque des revendications précédentes, dans lequel ladite réaction aérobie est effectuée dans un réacteur fermé.

11. Procédé selon l'une quelconque des revendications précédentes, dans lequel ladite réaction aérobie est effectuée avec une bactérie choisie dans la classe constituée des bactéries mésophiles et des bactéries thermophiles.

12. Procédé selon l'une quelconque des revendications précédentes, dans lequel un effluent gazeux contenant de l'oxygène est récupéré et recyclé audit mélange réactionnel et facultativement chauffé.

13. Procédé selon l'une quelconque des revendications précédentes, dans lequel ledit agent de gonflement est un polymère organique.

14. Procédé selon l'une quelconque des revendications précédentes, dans lequel ledit gaz contenant de l'oxygène est envoyé vers le bas au travers dudit mélange réactionnel.

15. Procédé selon l'une quelconque des revendications précédentes, dans lequel ledit gaz contenant de l'oxygène contient de 10 à 50 % en volume d'oxygène.

16. Procédé selon l'une quelconque des revendications précédentes, dans lequel des substances nutritives biologiques autres que le carbone sont ajoutées audit mélange réactionnel.

17. Procédé selon l'une quelconque des revendications précédentes, dans lequel ladite eau et ledit gaz contenant de l'oxygène sont soutirés dudit mélange réactionnel au travers d'un séparateur perméable à la vapeur et au liquide.

18. Procédé selon l'une quelconque des revendications précédentes, dans lequel ledit mélange réactionnel à haute teneur en matières solides a une densité allant de 160 à 1281 kg/m³ (10 à 80 livres par pied cube).

19. Procédé selon l'une quelconque des revendications précédentes, dans lequel au moins 50 % dudit constituant agent de gonflement revêtu de biomasse ayant une densité inférieure à celle de l'eau sont séparés de ladite boue ou dudit déchet traité(e).
